(19) Europäisches Patentamt
European Patent Office
Office européen des brevets

(11) Veröffentlichungsnummer: **0 445 401 A2**

# (12) EUROPÄISCHE PATENTANMELDUNG

(21) Anmeldenummer: **90124512.6**

(22) Anmeldetag: **18.12.90**

(51) Int. Cl.5: **C08G 59/18**, C08G 59/52, C08G 59/62, C08G 59/04, C08G 59/06

(30) Priorität: **07.03.90 DE 4007056**

(43) Veröffentlichungstag der Anmeldung: **11.09.91 Patentblatt 91/37**

(84) Benannte Vertragsstaaten: **CH DE FR GB IT LI**

(71) Anmelder: **BAYER AG**
**W-5090 Leverkusen 1 Bayerwerk(DE)**

(72) Erfinder: **Kirchmeyer, Stephan, Dr.**
**Heymannstrasse 36**
**W-5090 Leverkusen(DE)**
Erfinder: **Müller, Hanns-Peter, Dr.**
**Weizenfeld 36**
**W-5060 Bergisch Gladbach(DE)**
Erfinder: **Karbach, Alexander, Dr.**
**Scheiblerstrasse 81**
**W-4150 Krefeld(DE)**

## (54) Polymere Epoxidnetzwerke mit Überstruktur.

(57) Polymere Epoxidnetzwerke mit Überstrukturen können nach dem Verfahren der Polyaddition oder Polymerisation aus einer Epoxidgruppen enthaltenden Komponente A ohne flüssigkristallinen Charakter und einer mit Epoxidgruppen reagierenden Komponente B ohne flüssigkristallinen Charakter erhalten werden, wenn man beide in der Weise umsetzt, daß im Verlaufe der Polyaddition/Polymerisation ein intermediäres Zwischenprodukt C entsteht, welches flüssigkristallinen Charakter aufweist und welches beim Übergang in den Festkörper D diesen flüssigkristallinen Charakter unter Ausbildung eines Mehrphasen-Netzwerks überträgt.

EP 0 445 401 A2

Die Erfindung betrifft polymere Epoxidnetzwerke mit Überstruktur, ein Verfahren zu ihrer Herstellung und ihre Verwendung als polymere Werkstoffe, Beschichtungs- oder Überzugsmittel.

Epoxidharze sind seit langem technisch gebräuchlich; wichtige Vertreter leiten sich von den Diglycidylethern von Bisphenol A (2,2-Bis(4-hydroxyphenyl)-propyliden) ab. Die Eigenschaften der ausgehärteten Harze werden nicht nur stark von der Struktur der Reaktionspartner, also der Diglycidylether und der Härter, beeinflußt, sondern auch durch besondere zwischenmolekulare Wechselwirkungen infolge von Überstrukturen.

DE-OS 36 22 613 beschreibt ein Verfahren zur Herstellung polymerer Netzwerke mit besonderen Überstrukturen. Diese besonderen Überstrukturen oder die höhere Ordnung dieser Netzwerke werden dadurch erhalten, daß man den Aufbau des Netzwerkes mit Hilfe von Bausteinen vornimmt, die flüssigkristalline Strukturen ausbilden, die die besonderen Überstrukturen induzieren. Auch JP 63/10 617 (1988) und DE-OS 36 22 610 beschreiben den Einsatz flüssigkristalliner Bausteine für Epoxidharze mit gutem mechanischen Wertniveau, ohne jedoch auf die besonderen Überstrukturen einzugehen. EP 282 254 beschreibt die Härtung von nicht flüssigkristallinen Epoxidharzen mit flüssigkristallinen Aminkomponenten.

Es schien demnach nötig zu sein, mindestens eine Komponente im flüssigkristallinen Zustand mitzuverwenden, um Epoxidharzen eine besondere Überstruktur zu verleihen, wohingegen die Anwendung von Komponenten zur Epoxidharzbildung ohne flüssigkristalline Struktur stets zu einphasigen Netzwerken ohne erkennbare Überstruktur führt.

Es wurde nun überraschend gefunden, daß auch unter alleiniger Verwendung von Ausgangskomponenten ohne flüssigkristalline Struktur Epoxidnetzwerke mit einer Überstruktur erhalten werden, wenn ein Zwischenprodukt aus solchen nicht flüssigkristallinen Substanzen gebildet wird, das selbst eine flüssigkristalline Struktur aufweist und das diese flüssigkristalline Struktur bei der weiteren Härtung und Ausbildung des Festkörpers wieder überträgt.

Dies ist insofern überraschend und für den Fachmann nicht vorhersehbar, als daß die Kombination der nicht flüssigkristallinen Glycidylvorprodukte mit dem nicht flüssigkristallinen Härter keineswegs zur Ausbildung von Überstrukturen im ausgehärteten Netzwerk geeignet zu sein schienen.

Nach dem Stand der Technik entstehen aus flüssigkristallinen LC(= Liquid Crystal)-Ausgangskomponenten im Laufe der Reaktion zur Epoxidharzbildung neue Einheiten, denen die flüssigkristallinen Eigenschaften zugeordnet werden können und bei der Reaktion zum Polymer unverändert bleiben. Die nicht flüssigkristallinen Ausgangskomponenten für die erfindungsgemäßen polymeren Expoxidnetzwerke mit Überstruktur behalten ebenfalls ihre molekularen, hier nicht flüssigkristallinen, Eigenschaften im polymeren Netzwerk. Dennoch werden überraschenderweise Zwischenprodukte ausgebildet, die ihrerseits flüssigkristalline Strukturen in bestimmten Temperaturbereichen ausbilden und die im ausgehärteten Netzwerk Überstrukturen bilden.

Es wurden polymere Epoxidnetzwerke mit Überstruktur gefunden, die dadurch herstellbar sind, daß man mindestens eine Epoxidgruppen enthaltende Komponente A ohne flüssigkristallinen Charakter der Formel

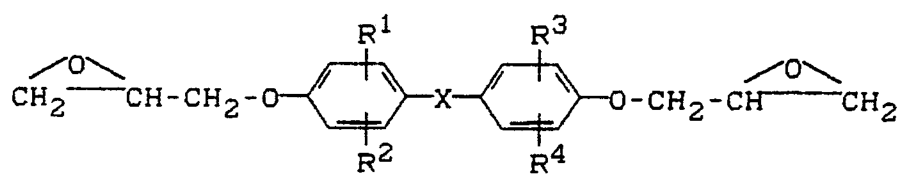 (I),

in der

| | |
|---|---|
| $R^1$, $R^2$, $R^3$ und $R^4$ | unabhängig voneinander Wasserstoff oder geradkettiges oder verzweigtes $C_1$-$C_{12}$-Alkyl, bei dem die C-Atome 1-3 mal durch Ether-Sauerstoff unterbrochen sein können, bedeuten oder Fluor, Chlor, Brom, Cyano oder Trifluormethyl bedeuten und |
| X | für eine Einfachbindung, $-CH_2-CH_2-$, $-CH(CH_3)-CH_2-$ oder $-CH(CH_3)-CH(CH_3)-$ steht, |

mit mindestens einer funktionell mit Epoxidgruppen reagierenden Komponente B ohne flüssigkristallinen Charakter der Formel

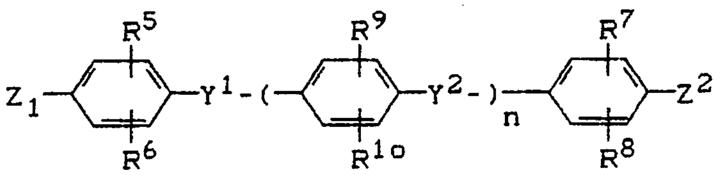

(II),

in der

$R^5$, $R^6$, $R^7$, $R^8$, $R^9$ und $R^{10}$ unabhängig voneinander und unabhängig von $R^1$-$R^4$ den Bedeutungumfang von $R^1$-$R^4$ annehmen,

$Z^1$ und $Z^2$ unabhängig voneinander für OH, $NH_2$ oder NH-$C_1$-$C_4$-Alkyl stehen,

$Y^1$ und $Y^2$ unabhängig voneinander für eine Einfachbindung, $-CH_2-CH_2-$, $-CH(CH_3)-CH_2-$, $-CH(CH_3)-CH(CH_3)-$, -CO-O-, -O-CO-, -CH=CH-, -N=N-, -CH=N-, $-OCH_2-$, $-CH_2O-$, $-CH_2S-$, $-SCH_2-$, -N=CH-, -CO-S- oder -S-CO-stehen und

n den Wert Null oder Eins annimmt,

im Temperaturbereich von 60-180 °C so umsetzt, daß ein intermediäres Zwischenprodukt C entsteht, welches flüssigkristallinen Charakter, erkennbar an der opaken Veränderung, aufweist und welches beim Übergang in den Festkörper D den flüssigkristallinen Charakter unter Ausbildung eines Mehrphasen-Netzwerkes als Überstruktur überträgt.

Es wurde weiterhin ein Verfahren zur Herstellung von polymeren Epoxidnetzwerken mit Überstruktur gefunden, das dadurch gekennzeichnet ist, daß man eine Komponente A ohne flüssigkristallinen Charakter der obigen Formel (I) mit einer Komponente B ohne flüssigkristallinen Charakter der obigen Formel (II) im Temperaturbereich von 60-180 °C so umsetzt, daß ein intermediäres Zwischenprodukt C entsteht, welches flüssigkristallinen Charakter, erkennbar an der opaken Veränderung, aufweist und welches beim Übergang in den Festkörper D den flüssigkristallinen Charakter unter Ausbildung eines Mehrphasen-Netzwerkes als Überstruktur überträgt.

Es wurde weiterhin die Verwendung der polymeren Epoxidnetzwerke mit Überstruktur gemäß obiger Beschreibung als polymere Werkstoffe, Beschichtungs- oder Überzugsmittel gefunden.

Geradkettiges oder verzweigtes $C_1$-$C_{12}$-Alkyl ist beispielsweise Methyl, Ethyl, Propyl, Isopropyl, Butyl, Isobutyl, tert.-Butyl, die isomeren Pentyle, Hexyle, Octyle, Decyle oder Dodecyle. In diesen genannten Substituenten kann die Kette der C-Atome 1-3 mal durch Ether-Sauerstoff unterbrochen sein; man erhält hierdurch Substituenten wie beispielsweise Methoxy, Ethoxy, Propoxy, Butoxy, Methoxyethyl, Ethoxyethyl, Strukturen wie $OC_2H_4-OCH_3$, $OC_2H_4-OC_2H_5$, $OC_2H_4-OC_2H_4-OC_2H_5$, $OCH_2-CH(CH_3)-OC_3H_7$, $-(OCH_2-CH(CH_3))_2-OC_3H_7$ und ähnliche.

Der bevorzugte Bedeutungsumfang der Substituenten $R^1$ bis $R^4$ ist unabhängig voneinander Wasserstoff, Methyl, Methoxy und Chlor.

Die Komponente A kann in Form einer einzigen Verbindung im Rahmen der Formel (I) oder in Form eines Gemisches mehrerer Verbindungen im Rahmen der Formel (I) umgesetzt werden.

In bevorzugter Weise wird als Komponente A mindestens eine Verbindung der Formel

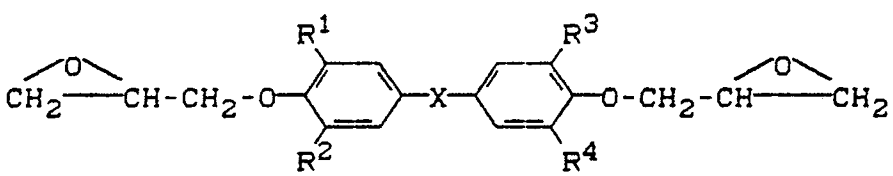

(III),

umgesetzt, in der $R^1$, $R^2$, $R^3$, $R^4$ und X den obengenannten Bedeutungsumfang haben.

In besonders bevorzugter Weise wird als Komponente A mindestens eine Verbindung der Formel

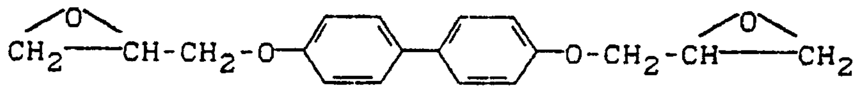 (IV)

bzw.

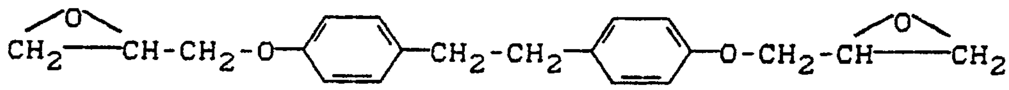

(V)

umgesetzt.

Erfindungsgemäß kann die Komponente A, die in Form von mindestens einer Verbindung im Rahmen der obigen Formeln (I), (III), (IV) und (V) umgesetzt wird, mit anderen Epoxidgruppen enthaltenden Verbindungen abgemischt werden.

Zur Abmischung mit der Komponente A sind aliphatische, cycloaliphatische, aromatische oder heterocyclische Verbindungen mit Epoxidgruppen, die an sich bekannt und technisch gebräuchlich sind und ihrerseits keinen flüssigkristallinen Charakter besitzen, geeignet. Solche Verbindungen können eine, zwei oder mehr Epoxidgruppen pro Molekül enthalten. Die den Epoxidgruppen enthaltenden Verbindungen zur Abmischung mit der Komponente A zugrundeliegenden aliphatischen Verbindungen haben 1 bis 20 C-Atome und stellen epoxidierbare Carbonsäuren, Carbonsäureanhydride, Alkohole, Dialkohole, Polyalkohole oder ungesättigte Verbindungen dar. Die epoxidierbaren cycloaliphatischen Verbindungen stellen Ringe mit 3-7 C-Atomen, bevorzugt mit 5 oder 6 C-Atomen dar, welche ihrerseits bis zu 3 Methyl- oder Ethylgruppen tragen können und außerdem solche funktionelle Gruppen tragen, daß sie zu den obengenannten Verbindungsklassen zählen. Als aromatische Verbindungen seien Phenole, Polyphenole, Carbonsäuren, Polycarbonsäuren, Hydroxycarbonsäuren, aromatische Amine oder aromatische Polyamine genannt, deren Grundgerüst ein Benzol- oder Naphthalinkern ist. Ferner gehören zu solchen aromatischen Verbindungen solche, deren Grundgerüst aus zwei Benzolkernen zusammengesetzt ist, die durch eine Einfachbindung, durch eine $C_1$-$C_6$-Alkylengruppe, durch eine $C_2$-$C_6$-Alkylidengruppe, durch eine $C_5$-$C_6$-Cycloalkylengruppe, durch eine $C_5$-$C_6$-Cycloalkylidengruppe, durch Sauerstoff, Schwefel, $-SO_2-$ oder -CO- verknüpft sind.

Als Grundgerüst für epoxidierbare heterocyclische Verbindungen seien aromatische oder nicht-aromatische 5- oder 6-Ringe mit einem oder zwei Stickstoff-, Sauerstoff- oder Schwefelatomen genannt, die Hydroxyl-, Carboxyl-oder Aminogruppen zur Epoxidierung tragen.

Beispiele für solche zur Abmischung mit der Komponente A geeignete Verbindungen sind:

Polyglycidylether mehrwertiger Phenole, beispielsweise von Brenzkatechin, Resorcin, Hydrochinon, 4,4'-Dihydroxydiphenyl-dimethylmethan, 4,4'-Dihydroxydiphenylcyclohexan, 4,4'-Dihydroxy-3,3'-dimethyl-diphenylpropan, 4,4'-Dihydroxydiphenyl-sulfon, Tris-(4-hydroxyphenyl)-methan, von Chlorierungs- und Bromierungsprodukten der vorstehend genannten Polyphenole, von Novolaken (Umsetzungsprodukte von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Hydroxycarbonsäure mit 1 Mol eines Dihalogenalkans oder Dihalogendialkylethers erhalten wurden (GB 1.017.612), von Polyphenolen, die durch Kondensation von Phenolen und langkettigen, mindestens zwei Halogenatome enthaltenden Halogenparaffinen erhalten werden (GB 1.024.288);

Phenyl-Epoxid-Verbindungen auf der Basis von aromatischen Aminen und Epichlorhydrin, beispielsweise N-Di-(2,3-epoxy-propyl)-anilin, N,N'-Dimethyl-N,N'-diepoxypropyl-4,4'-diamino-diphenylmethan, N-Diepoxypropyl-4-aminophenyl-glycidylether (GB 772.830 und GB 816.923); Glycidylester mehrwertiger aromatischer,. aliphatischer und cycloaliphatischer Carbonsäuren, wie Phthalsäure-diglycidylester, Adipinsäure-diglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen (n = 2-6) oder Hexahydrophthalsäure-glycidylester, die gegebenenfalls mit Methylgruppen substituiert sein können;

Glycidylether mehrwertiger Alkohole, beispielsweise von 1,4-Butandiol, Glycerin, Trimethylolpropan, Pentaerythrit und von Polyethylenglykolen;

weitere Glycidylverbindungen, wie Triglycidyl-isocyanurat, N,N-Di-epoxypropyl-oxamid, Polyglycidylthioether aus mehrwertigen Thiolen, wie Bis-Mercaptomethyl-benzol, Diglycidyl-trimethylen-trisulfon, Polyglycidylether auf Basis von Hydantoinen;

Epoxidierungsprodukte von ungesättigten oder mehrfach ungesättigten (cyclo)aliphatischen Verbindungen, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, beispielsweise auf Basis von Butadien, Polyisopren, Butadien-Styrol-Mischpolymerisaten, Divinylbenzoldicyclopentadien, ungesättigten Polyestern, ferner Epoxidierungsprodukte aus Olefinen, welche durch Diels-Alder-Addition zugänglich sind und anschließend durch Epoxidierung mit Perverbindungen in Polyepoxide übergeführt werden oder aus Verbindungen, die zwei Cyclopenten- oder Cyclohexenringe über Brückenatome oder Brückenatomgruppen der obengenannten Art verknüpft enthalten; weiterhin seien Polymerisate von ungesättigten Monoepoxiden genannt, beispielsweise von Methacrylsäure-glycidylestern oder Allyl-glycidylethern.

In bevorzugter Weise werden zur Abmischung mit der Komponente A eine oder mehrere Verbindungen der folgenden Gruppe eingesetzt: Polyglycidylether mehrwertiger Phenole, insbesondere von Bisphenol A; Polyepoxidverbindungen auf der Basis von aromatischen Aminen, insbesondere Bis(N-epoxypropyl)-anilin, N,N'-Dimethyl-N,N'-diepoxypropyl-4,4'-diaminodiphenylmethan und N-Diepoxypropyl-4-amino-phenylglycidylether; Polyglycidylester aus cycloaliphatischen Dicarbonsäuren, insbesondere Hexahydrophthalsäurediglycidylester; Polyepoxide aus dem Umsetzungsprodukt von n Molen Hexahydrophthalsäure-anhydrid und 1 Mol eines Polyols mit n Hydroxylgruppen (n bedeutet eine ganze Zahl von 2 bis 6), insbesondere von 3 Mol Hexahydrophthalsäureanhydrid und 1 Mol 1,1,1-Trimethylolpropan; 3,4-Epoxy-cyclohexylmethyl-3,4-epoxy-cyclohexancarboxylat.

Mit besonderem Vorteil können flüssige Polyepoxide, wie Bis(N-epoxypropyl)-anilin oder Vinylcyclohexen-diepoxid verwendet werden. Dies kann in manchen Fällen die Viskosität von bereits flüssigen Polyepoxiden weiter herabsetzen oder feste Polyepoxide in flüssige Mischungen überführen.

In Abmischungen der Komponente A mit den genannten zur Abmischung geeigneten Epoxidverbindungen stellt die Komponente A 50-100 Mol-%, bevorzugt 70-100 Mol-%, besonders bevorzugt 85-100 Mol-%, ganz besonders bevorzugt 95-100 Mol-% der gesamten Abmischung dar. Diese Nomenklatur umfaßt demnach auch die Umsetzung der Komponente A ohne Abmischungsbestandteile.

Die Komponente B umfaßt Verbindungen der Formel (II), die funktionell mit Epoxidgruppen reagieren können; dies sind Verbindungen mit Hydroxylgruppen, primären oder sekundären Aminogruppen oder Verbindungen die zwei verschiedene der genannten funktionellen Gruppen enthalten. Die Verbindungen, die als Komponente B in Betracht kommen, sind, ebenso wie die zur Komponente A rechnenden Verbindungen, nicht flüssigkristallin. Als Komponente B kann eine oder können mehrere Verbindungen der Formel (II) umgesetzt werden.

In bevorzugter Weise wird als Komponente B mindestens eine Verbindung der Formel

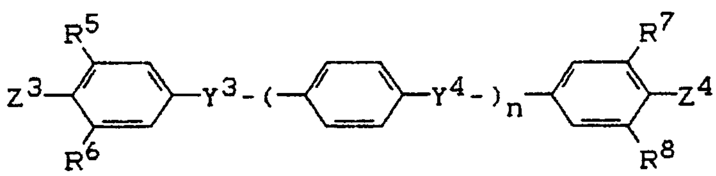

(VI)

umgesetzt, in der

| | |
|---|---|
| $R^5$ bis $R^8$ | unabhängig voneinander den oben angegebenen Bedeutungsumfang haben, |
| $Z^3$ und $Z^4$ | unabhängig voneinander OH oder $NH_2$ bedeuten, |
| $Y^3$ und $Y^4$ | unabhängig voneinander für eine Einfachbindung, $-CH_2-CH_2-$, -CO-O- oder -O-CO- stehen und |
| n | den Wert Null oder Eins annimmt. |

In besonders bevorzugter Weise wird als Komponente B mindestens eine Verbindung aus der Gruppe

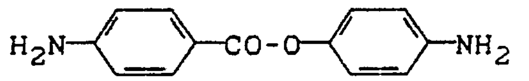 (VII),

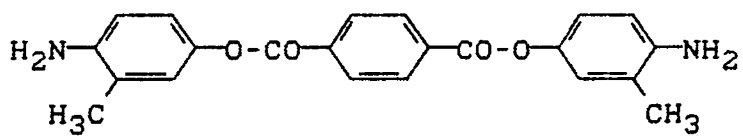 (VIII),

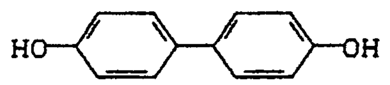 , 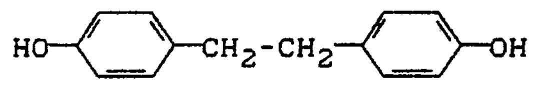 ,

(IX) (X)

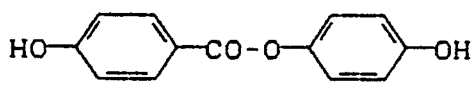 (XI)

umgesetzt.

In ähnlicher Form, wie dies weiter oben für die Komponente A beschrieben wurde, kann auch die Komponente B mit einem polyfunktionellen Amin, polyfunktionellen Phenol oder einem Epoxid-Härter oder einem Gemisch mehrerer von ihnen, wie sie an sich bekannt und technisch gebräuchlich sind, abgemischt werden. Solche zur Abmischung mit der Komponente B geeignete Verbindungen sind dem Fachmann beispielsweise bekannt aus "Polymere Werkstoffe", herausgegeben von H. Batzer, Band III, Technologie 2, Georg Thieme Verlag, Stuttgart 1984, Seite 170 ff. und "Methoden der organischen Chemie" (Houben-Weyl), Band E 20 (Makromolekulare Stoffe), Georg Thieme Verlag, Stuttgart, New York 1987, Seite 1965 ff. und Seite 1976 ff..

Auch solche zur Abmischung mit der Komponente B geeignete Stoffe sind nicht flüssigkristallin.

Beispiele hierfür sind polyfunktionelle Amine, wie Diethylentriamin, m-Phenylen-diamin, 4,4'-Diaminodiphenylsulfon und 4,4'-Diamino-diphenylmethan. Technisch gebräuchliche Epoxidharz-Härter, die zur Abmischung mit der Komponente B in Frage kommen, sind tertiäre Amine, wie Benzyl-dimethylamin, 2-(Dimethylaminomethyl)-phenol, 2,4,6-Tris(dimethylaminomethyl)-phenol oder Triethanolamin, Alkoholate oder Imidazole, wie N-n-Butyl-imidazol.

In Frage kommen für den Fall, daß die Komponente B oder deren Abmischungszusätze keine Aminogruppen enthalten, auch Oniumverbindungen in Verbindung mit Reduktions- oder Oxidationsmitteln, die die kationische Polymerisation von 1,2-Epoxidgruppen auch thermisch initiieren können, sowie Verbindungen, die nach UV-Bestrahlung kationisch aktive Initiatoren freisetzen, wie Iodoniumsalze, Triarylsulfoniumsalze, Eisen-aren-Komplexe, Bortrifluoridkomplexe oder Protonensäuren.

In einer Abmischung der Komponente B mit den zur Abmischung geeigneten, obengenannten Verbindungen stellt die Komponente B 50-100 Mol-%, bevorzugt 70-100 Mol-%, besonders bevorzugt 85-100 Mol-%, ganz besonders bevorzugt 95-100 Mol-% der gesamten Abmischung dar. Diese Nomenklatur umfaßt demnach auch die Umsetzung der Komponente B ohne Abmischungsbestandteile.

In überraschender Weise bilden die im Verlaufe der Epoxidharz-Herstellung zunächst entstehenden intermediären Zwischenprodukte C flüssigkristalline Phasen aus, obwohl sie aus nicht-flüssigkristallinen Komponenten A und B gebildet werden. Es handelt sich hierbei im allgemeinen um nematische Strukturen. Diese flüssigkristallinen Strukturen der Zwischenprodukte C führen zur Ausbildung von Überstrukturen, d.h. zur Ausbildung von mehrphasigen Netzwerken im ausgehärteten Epoxidharz-Festkörper D.

Es ist daher bei der Herstellung der erfindungsgemäßen polymeren Epoxidnetzwerke mit Überstruktur darauf zu achten, daß solche flüssigkristallinen Strukturen bei den intermediären Zwischenprodukten C auftreten. Das Auftreten dieser Strukturen ist an der opaken Veränderung des Gemisches der nicht-flüssigkristallinen Komponenten A und B bzw. deren oben beschriebenen Abmischungen zu erkennen. Solche opaken Veränderungen, die die Ausbildung der flüssigkristallinen Strukturen bei den intermediären

Zwischenprodukten C anzeigen, werden im Temperaturbereich von 60-180 °C, bevorzugt 60-160 °C, besonders bevorzugt 60-140 °C erreicht. Der günstigste Bereich für solche opaken Veränderungen ist selbstverständlich abhängig von der gewünschten Zusammensetzung des Reaktionsgemisches aus den Komponenten A und B bzw. deren Abmischungen und kann durch einfache Vorversuche festgestellt und optimiert werden. Die beschriebene opake Veränderung (milchige Trübung) bleibt beim Übergang in den Festkörper erhalten. Nach Übergang in den Festkörper läßt sich die Mehrphasigkeit durch Temperaturbehandlung nicht mehr verändern, so daß selbst bei Temperung in einem Temperaturbereich, der deutlich oberhalb des Bereiches für den flüssigkristallinen Zustand des Zwischenproduktes C liegt, die Trübung erhalten bleibt. Beginnt man jedoch die Härtung der flüssigen Reaktionsmischung aus den Komponenten A und B (bzw. deren Abmischungen) in einem Temperaturbereich, der außerhalb des obengenannten liegt und in welchem das intermediäre Zwischenprodukt C keinen flüssigkristallinen Charakter besitzt, erhält man klare, durchsichtige, einphasige Formkörper als Festkörper D, die keine erfindungsgemäßen polymeren Netzwerke mit Überstruktur darstellen.

Die im Anschluß an die Ausbildung eines flüssigkristallinen Zustandes des intermediären Zwischenprodukts C weiter durchzuführende Härtung kann im Bereich von 60 bis 250 °C, bevorzugt 60 bis 180 °C, durchgeführt werden.

Der Härtungsvorgang kann zu jedem beliebigen Zeitpunkt, insbesondere nach der Ausbildung des flüssigkristallinen Zustandes des intermediären Zwischenprodukts C, durch Abkühlung auf eine Temperatur unterhalb von 60 °C unterbrochen und zu einem späteren Zeitpunkt fortgesetzt werden. Zweckmäßig wird der Zeitpunkt der Unterbrechung der Umsetzung so gewählt, daß die beim Abkühlen erhaltene Mischung zwar im festen Zustand vorliegt, jedoch bei späterem Aufheizen auf die Temperatur der endgültigen Aushärtung im oben genannten Bereich wieder flüssig wird bzw. unter Druck verformbar wird. Die Anwendung dieses Verfahrens mit unterbrochener Härtung ist dann besonders vorteilhaft, wenn als Anwendungsgebiete Schichtpreßstoffe, faserverstärkte Prepregs, Preßmassen und Beschichtungsmassen, beispielsweise nach dem Wirbelsinterverfahren, in Betracht kommen. In jedem Falle ist dieses Verfahren vorteilhaft, wenn die Herstellung der durch unterbrochene Härtung erhaltenen Vorprodukte und deren endgültige Anwendung an verschiedenen Orten durchgeführt werden und erst der Anwender die endgültige Formgebung oder Formveränderung durchführt.

Zur Herstellung der erfindungsgemäßen polymeren Epoxidnetzwerke mit Überstruktur werden die Komponenten A und B (bzw. deren Abmischungen) in einem Mischungsverhältnis zusammengegeben, bei dem auf eine Epoxidgruppe etwa eine Phenolgruppe oder eine sekundäre Amingruppe oder auf zwei Epoxidgruppen eine primäre Amingruppe entfällt. Dieses Mischungsverhältnis kann wie bei herkömmlichen Epoxidharzen um bis zu 40 Äquivalent-% der genannten reaktiven Gruppen, bevorzugt um bis zu 20 Äquivalent-% bei der Komponente A bzw. B (bzw. deren Abmischungen) verändert werden.

Zur Herstellung der erfindungsgemäßen polymeren Epoxidnetzwerke mit Überstruktur können weiterhin Füllstoffe, wie Quarzmehl, Kreide, Aluminiumoxid, anorganische Pigmente wie Titandioxid, Eisenoxid, organische Pigmente, wie Phthalocyaninpigmente, Flexibilisatoren, wie Polyglykole, Polyetherglykole, Polyester mit endständigen Hydroxyl- und/oder Carboxylgruppen, Polysulfide, lösliche Farbstoffe, Verstärkungsmaterialien, wie Glasfasern, Gewebe oder Weichmacher in Mengen zugefügt werden, wie sie aus der Chemie der Epoxidharze bekannt sind. Es können auch mehrere dieser Zusatzstoffe eingesetzt werden.

Die erfindungsgemäßen polymeren Epoxidnetzwerke mit Überstruktur zeichnen sich im Vergleich mit solchen ohne Überstruktur bei gleichen thermischen Eigenschaften durch erhöhte Festigkeits- und Zähigkeitseigenschaften aus. Sie sind, soweit dies nicht oben bereits beschrieben wurde, als Gießharzformstoffe, beispielsweise als Konstruktions- und Isolierstoffe für Isolatoren, Transformatoren, Kondensatoren, gedruckten Schaltungen, sowie als Schichtpreßstoffe, für Rohre und Behälter für aggressive Flüssigkeiten, für Sportgeräte, beispielsweise für den Bootsbau, und für viele andere Bereiche verwendbar.

## Beispiele

### Beispiel 1 4,4'-Diglycidylbiphenyl (IV)

Im 10 l-Dreihalskolben mit Rückflußkühler, Rührer und Innenthermometer wurden 558 g (3 Mol) Dihydroxybiphenyl, 5550 g (60 Mol) Epichlorhydrin und 12 g Tetraethylammoniumchlorid 48 Stunden bei 117 °C gerührt. Der Rückflußkühler wurde durch einen Wasserabscheider für schwere Lösungsmittel ersetzt und die Lösung zum Rückfluß erhitzt. Über eine Zeit von 7 Stunden tropfte man 560 g (6,3 Mol) 45 %ige wäßrige Natronlauge zu und kreiste zugesetztes und entstehendes Wasser fortwährend aus. Nach vollendeter Zugabe der Natronlauge rührte man weitere 3 Stunden unter Rückfluß und Wasserauskreisung nach. Man filtrierte heiß und wusch den Rückstand mit Methylenchlorid nach. Man ließ die Lösung erkalten,

saugte die Ausfällung ab und engte das Filtrat am Rotationsverdampfer zur Trockne ein. Das vereinigte Festprodukt kristallisierte man zweimal aus Toluol um. Man erhielt 713 g (76 % der theoretischen Ausbeute) 4,4'-Diglycidylbiphenyl (IV) vom Fp. 144-9 °C.

Beispiel 2 4,4'-Dihydroxybibenzyl (X)

Im 2 l-Dreihalskolben mit Innenthermometer, Rührer und Rückflußkühler wurden 212,3 g (1 Mol) Diaminobibenzyl in 15 %iger Schwefelsäure gelöst und auf eine Temperatur von 0 °C gekühlt. Man tropfte eine Lösung von 138,1 g (2 Mol) Natriumnitrit in 700 ml Wasser so zu, daß die Innentemperatur des Kolbens unter +5 °C gehalten wurde. Nach vollständiger Zugabe erhitzte man vorsichtig auf 90 °C, wobei starke Gasentwicklung eintrat. 30 Minuten nach Beendigung der Gasentwicklung ließ man abkühlen und saugte das Produkt ab, das im Vakuumtrockenschrank bei 30 °C/30 Torr getrocknet wurde. Es besitzt einen Schmelzpunkt von 164 bis 168 °C. Nach Kristallisation aus Xylol erhielt man 125 g (58 % der theoretischen Ausbeute) 4,4'-Dihydroxybibenzyl (IX) mit einem Fp. von 169 °C.

Beispiel 3 4,4'-Diglycidylbibenzyl (V)

Im 2 l-Dreihalskolben mit Rückflußkühler, Rührer und Innenthermometer rührte man 60 g (0,28 Mol) 4,4'-Dihydroxybibenzyl und 925 g (10 Mol) Epichlorhydrin 48 Stunden bei 60 °C, tauschte den Rückflußkühler gegen einen Wasserabscheider für schwere Lösungsmittel und tropfte bei 60 °C/115 mbar 52,2 g (0,588 Mol) 45 %ige Natronlauge über 4 1/2 Stunden zu. Dabei wurde das zugesetzte und das entstehende Wasser fortwährend ausgekreist. Nach erfolgter Zugabe der Natronlauge wurde das Auskreisen für weitere 3 Stunden fortgesetzt. Nach Abkühlung auf Raumtemperatur wurde das Epichlorhydrin am Rotationsverdampfer entfernt. Man nahm in Toluol auf, filtrierte, entfernte das Toluol im Vakuum und trocknete das Rohprodukt im Vakuumtrockenschrank (40 °C/30 Torr). Man erhielt 78,2 g (85,7 % der theoretischen Ausbeute) rohes 4,4'-Diglycidylbibenzyl (V), Fp. 65 °C. Nach mehrmaliger Kristallisation aus Isopropanol erhielt man 37,5 g (41 % der theoretischen Ausbeute) 4,4'-Diglycidylbibenzyl mit einem Fp. von 69 bis 71 °C.

Beispiel 4 Aufbau eines polymeren Netzwerks mit Ordnungsstrukturen

Proben von Bisepoxid (IV) und Diamin (VIII) untersuchte man unter dem Polarisationsmikroskop mit gekreuzten Polarisatoren, ausgestattet mit einem Heiztisch.

Das Bisepoxid (IV) schmolz bei 149 °C zu einer klaren Schmelze, ohne daß flüssigkristalline Texturen sichtbar wurden, Ließ man die Probe nach weiterem Erwärmen langsam von 180 °C aus abkühlen, beobachtete man bei 145 °C Kristallisation, Das Diamin (VIII) schmolz bei 242 °C ebenfalls zu einer klaren Schmelze, ohne daß flüssigkristalline Texturen sichtbar wurden, beim Abkühlen kristallisierte es bei 231 °C. Man erhitzte nun eine Mischung aus 5,96 g Bisepoxid (IV) und 3,76 g Diamin (VIII) im Reagenzglas auf 145 °C. Man beobachtete ein Schmelzen von (IV) und das langsame Auflösen von (VIII) in dieser Schmelze, Nach 15 Minuten war das Diamin klar gelöst. Man goß auf ein Blech und untersuchte die opake, zähviskose Masse unter dem Polarisationsmikroskop.

Diese Masse wurde bei 100 °C dünnviskos, erschien opak und zeigte bis 135 °C LC-Texturen. Ab 135 °C erhielt man eine klare Schmelze ohne LC-Texturen.

Hielt man die Temperatur der Probe über 20 Minuten konstant bei 120 °C, so konnte man die gesamte Zeit über LC-Texturen beobachten, die Probe war anschließend vernetzt und ließ sich nicht mehr scheren. Beim Aufheizen auf 200 °C verschwanden die Texturen nicht mehr, die Probe (Festkörper) erschien opak.

Hielt man die Temperatur einer Probe über 20 Minuten konstant bei 150 °C, so ließen sich die gesamte Zeit über keine LC-Texturen beobachten, Die Probe war anschließend vernetzt und zeigte auch beim Abkühlen keine LC-Texturen. Die Probe (Festkörper) erschien klar. Im Gegensatz zur klaren Probe war die trübe Probe jedoch mehrphasig.

Dieser Versuch machte deutlich, daß aus nicht-flüssigkristallinen Komponenten ein flüssigkristallines Intermediat entsteht, dessen flüssigkristalliner Charakter beim Übergang in den Festkörper übertragen wird unter Ausbildung eines Mehrphasensystems. Netzwerke mit Überstrukturen erscheinen opak.

Beispiel 5

Das Diamin (VIII) wurde in den in Tabelle 1 angegebenen Mengenverhältnissen im Bisepoxid (IV) bei 145 °C gelöst und durch Tempern bei verschiedenen Temperaturen zum Vernetzen gebracht.

**Tabelle 1**

| Versuch Nr. | Bisepoxid (IV) (g) | Diamin (VIII) (g) | Tempern 1 (°C) | Tempern 1 (Std.) | Tempern 2 (°C) | Tempern 2 (Std.) | Eigenschaften des Festkörpers |
|---|---|---|---|---|---|---|---|
| (1)* | 5,96 | 3,76 | 160 | 24 | - | | transparent |
| 2 | 5,96 | 3,76 | 80 | 4 | 160 | 16 | opak |
| 3 | 5,96 | 3,76 | 100 | 4 | 160 | 16 | opak |
| 4 | 5,96 | 3,76 | 120 | 4 | 160 | 16 | opak |
| 5 | 5,96 | 3,76 | 120 | 4 | 200 | 16 | opak |
| 6 | 200 | 126 | 100 | 4 | 160 | 16 | opak |
| (7)* | 200 | 126 | 160 | 4 | 200 | 16 | transparent |

* nicht erfindungsgemäß

Tabelle 1 macht deutlich, daß beim Härten aus nichtflüssigkristallinen Komponenten nur dann mehrphasige Netzwerke mit Überstrukturen erhalten werden, wenn das entstehende Intermediat eine flüssigkristalline Phase besitzt. Härtet man im isotropen Temperaturbereich des Intermediates (Versuche 1 und 7) erhält man nicht erfindungsgemäße transparente Festkörper, während im flüssigkristallinen Temperaturbereich des Intermediates (Versuche 2 bis 6) opake Festkörper erhalten werden.

Tabelle 2

Eigenschaften der Epoxidharzfestkörper aus Versuch 6 und 7

| | Versuch 6 | Versuch 7 |
|---|---|---|
| Biegefestigkeit (MPa) | 120 | 96 |
| Randfaserdehnung (%) | 5,7 | 4,0 |
| Schlagzähigkeit ($kJ/m^2$) | 40 | 28 |
| Martensgrad (°C) | 183 | 182 |

Beispiel 6

Eine Mischung aus 5,96 g Bisepoxid (IV) und 2,28 g Diamin (VII) erhitzte man 15 Minuten auf 145° C. Es entstand eine klare Schmelze, die auf ein Blech gegossen wurde, Eine Probe der abgekühlten zähviskosen, opaken Masse wurde unter dem Polarisationsmikroskop mit gekreuzten Polarisatoren aufgeheizt. Die Schmelze wurde bei etwa 80° C dünnviskos. Sie zeigte flüssigkristalline Texturen, die bei Temperaturen oberhalb von 113° C verschwanden. Die Probe veränderte dabei ihr Aussehen von opak nach transparent. Beobachtete man eine Probe bei konstant 80° C über 40 Minuten, waren während der gesamten Zeit flüssigkristalline Texturen sichtbar. Die Probe (Festkörper) war anschließend vernetzt und veränderte sich auch beim Aufheizen auf 160° C nicht mehr.

Eine Probe, deren Temperatur über 40 Minuten konstant auf 140° C gehalten wurde, ließ keine flüssigkristallinen Texturen erkennen und war danach vernetzt. Sie veränderte sich auch beim Abkühlen nicht.

Beispiel 7

Man erhitzte eine Mischung aus 5,96 g Bisepoxid (IV) und 2,28 g Diamin (VII) 15 Minuten auf 145° C, entgaste, goß die klare Schmelze in eine Form und temperte anschließend 4 Stunden bei 80° C und 16 Stunden bei 160° C nach. Man erhielt einen opaken Festkörper.

Beispiel 8

Man untersuchte das Bisepoxid (V) unter dem Polarisationsmikroskop mit gekreuzten Polarisatoren. Das Bisepoxid (V) schmolz bei 71° C, ohne daß flüssigkristalline Texturen auftraten. Beim Abkühlen kristallisierte es bei 69° C.

Man erhitzte nun 6,52 g Bisepoxid (V) und 3,76 g Amin (VIII) 15 Minuten auf 120° C. Es entstand eine klare Schmelze des Zwischenprodukts C, die auf ein Blech gegossen wurde. Eine Probe dieser abgekühlten, zähviskosen und opaken Masse wurde unter dem Polarisationsmikroskop mit gekreuzten Polarisatoren untersucht. Die Schmelze zeigte beim Aufheizen bis 52° C flüssigkristalline Texturen. Sie wurde 5 Minuten auf 120° C erhitzt und auf Raumtemperatur abgekühlt. Wurde diese Probe langsam wieder aufgeheizt, waren flüssigkristalline Texturen bereits bis 55° C zu beobachten. Durchlief man diesen Temperaturzyklus ein weiteres Mal, stieg die Klärtemperatur sodann auf 61° C an.

Man erhitzte eine Mischung aus 6,52 g Bisepoxid (V) und 3,76 g Diamin (VIII) 15 Minuten auf 120° C, entgaste und goß die klare Schmelze in eine Form und temperte 4 Stunden bei 60° C und 16 Stunden bei 160° C nach. Man erhielt einen opaken Festkörper.

Beispiel 8 demonstriert, daß der flüssigkristalline Charakter der Schmelze erst während der Reaktion zwischen Bisepoxid (V) (Komponente A) und Diamin (VIII) (Komponente B) entsteht und daß die Klärtemperatur des Intermediats C während der Härtung ansteigt. Zu Beginn der Härtungsreaktion bei 60° C überschreitet die Härtungstemperatur die Klärtemperatur des Intermediats (52° C) und dieses ist daher nicht

flüssigkristallin. Vor Übergang in den Festkörper D erreicht jedoch die Klärtemperatur des Intermediats C die Härtungstemperatur und das Intermediat erhält flüssigkristsllinen Charakter.

Ausschlaggebend für das Entstehen von Überstrukturen ist alleinig die flüssigkristalline Eigenschaft des Intermediats C bei Übergang in den Festkörper. Temperaturen unterhalb 60 °C führen allgemein nicht zu einer Aushärtung.

## Patentansprüche

1. Polymere Epoxidnetzwerke mit Überstruktur, dadurch herstellbar, daß man mindestens eine Epoxidgruppen enthaltende Komponente A ohne flüssigkristallinen Charakter der Formel

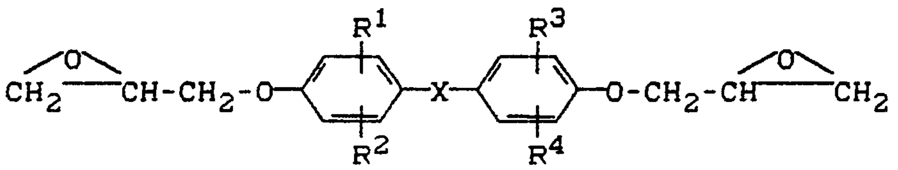 ,

in der

| | |
|---|---|
| $R^1$, $R^2$, $R^3$ und $R^4$ | unabhängig voneinander Wasserstoff oder geradkettiges oder verzweigtes $C_1$-$C_{12}$-Alkyl, bei dem die C-Atome 1-3 mal durch Ether-Sauerstoff unterbrochen sein können, bedeuten oder Fluor, Chlor, Brom, Cyano oder Trifluormethyl bedeuten und |
| X | für eine Einfachbindung, $-CH_2-CH_2-$, $-CH(CH_3)-CH_2-$ oder $-CH(CH_3)-CH(CH_3)-$ steht, |

mit mindestens einer funktionell mit Epoxidgruppen reagierenden Komponente B ohne flüssigkristallinen Charakter der Formel

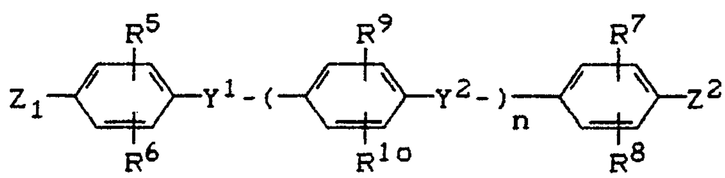 ,

in der

| | |
|---|---|
| $R^5$, $R^6$, $R^7$, $R^8$, $R^9$ und $R^{10}$ | unabhängig voneinander und unabhängig von $R^1$-$R^4$ den Bedeutungumfang von $R^1$-$R^4$ annehmen, |
| $Z^1$ und $Z^2$ | unabhängig voneinander für OH, $NH_2$ oder NH-$C_1$-$C_4$-Alkyl stehen, |
| $Y^1$ und $Y^2$ | unabhängig voneinander für eine Einfachbindung, $-CH_2-CH_2-$, $-CH(CH_3)-CH_2-$, $-CH(CH_3)-CH(CH_3)-$, -CO-O-, -O-CO-, -CH=CH-, -N=N-, -CH=N-, $-OCH_2-$, $-CH_2O-$, $-CH_2S-$, $-SCH_2-$, -N=CH-, -CO-S- oder -S-CO- stehen und |
| n | den Wert Null oder Eins annimmt, |

im Temperaturbereich von 60-180 °C so umsetzt, daß ein intermediäres Zwischenprodukt C entsteht, welches flüssigkristallinen Charakter, erkennbar an der opaken Veränderung, aufweist und welches beim Übergang in den Festkörper D den flüssigkristallinen Charakter unter Ausbildung eines Mehrphasen-Netzwerkes als Überstruktur überträgt.

2. Verfahren zur Herstellung von polymeren Epoxidnetzwerken mit Überstruktur, dadurch gekennzeichnet, daß man mindestens eine Epoxidgruppen enthaltende Komponente A ohne flüssigkristallinen Charakter der Formel

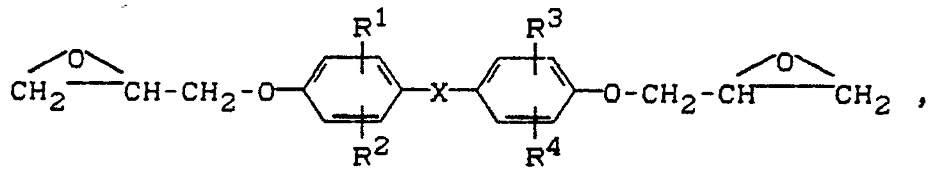

in der

$R^1$, $R^2$, $R^3$ und $R^4$ unabhängig voneinander Wasserstoff, geradkettiges oder verzweigtes $C_1$-$C_{12}$-Alkyl, bei dem die C-Atome 1-3 mal durch Ether-Sauerstoff unterbrochen sein können, Fluor, Chlor, Brom, Cyano oder Trifluormethyl bedeuten und

X für eine Einfachbindung, $-CH_2-CH_2-$, $-CH(CH_3)-CH_2-$ oder $-CH(CH_3)-CH(CH_3)-$ steht,

mit mindestens einer funktionell mit Epoxidgruppen reagierenden Komponente B ohne flüssigkristallinen Charakter der Formel

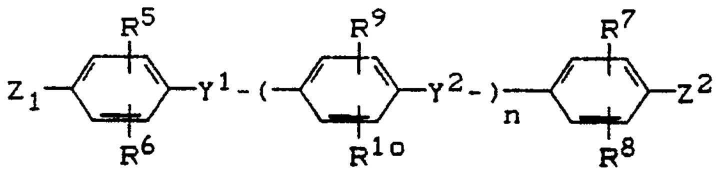

in der

$R^5$, $R^6$, $R^7$, $R^8$, $R^9$ und $R^{10}$ unabhängig voneinander und unabhängig von $R^1$-$R^4$ den Bedeutungumfang von $R^1$-$R^4$ annehmen,

$Z^1$ und $Z^2$ unabhängig voneinander für OH, $NH_2$ oder NH-$C_1$-$C_4$-Alkyl stehen,

$Y^1$ und $Y^2$ unabhängig voneinander für eine Einfachbindung, $-CH_2-CH_2-$, $-CH(CH_3)-CH_2-$, $-CH(CH_3)-CH(CH_3)-$, -CO-O-, -O-CO-, -CH=CH-, -N=N-, -CH=N-, $-OCH_2-$, $-CH_2O-$, $-CH_2S-$, $-SCH_2-$, -N=CH-, -CO-S- oder -S-CO- stehen und

n den Wert Null oder Eins annimmt,

im Temperaturbereich von 60-180 °C so umsetzt, daß ein intermediäres Zwischenprodukt C entsteht, welches flüssigkristallinen Charakter, erkennbar an der opaken Veränderung, aufweist und welches beim Übergang in den Festkörper D den flüssigkristallinen Charakter unter Ausbildung eines Mehrphasen-Netzwerkes als Überstruktur überträgt.

3. Verwendung der polymeren Epoxidnetzwerke mit Überstruktur nach Anspruch 1 als polymere Werkstoffe, Beschichtungs- oder Überzugsmittel.

4. Netzwerke nach Anspruch 1, herstellbar durch Umsetzung mindestens einer Komponente A der Formel

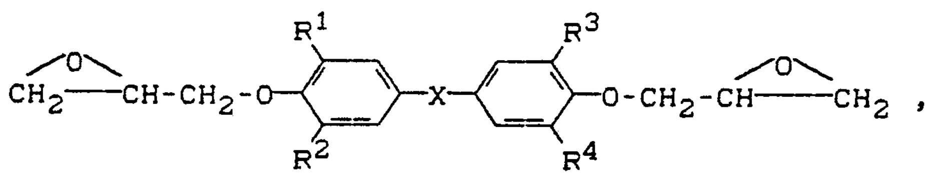

in der $R^1$, $R^2$, $R^3$, $R^4$ und X den in Anspruch 1 genannten Bedeutungsumfang haben,

bevorzugt herstellbar durch Umsetzung mindestens einer Komponente A der Formel

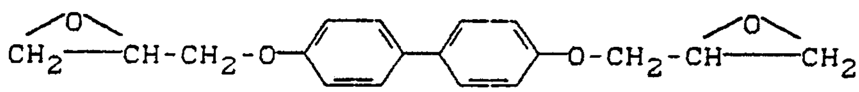

bzw.

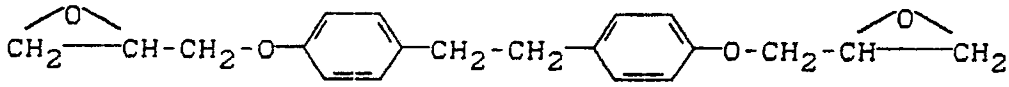

5. Netzwerke nach Anspruch 1, herstellbar durch Umsetzung mindestens einer Komponente A, wobei die Komponente A mit mindestens einer Epoxidgruppen enthaltenden aliphatischen, cycloaliphatischen, aromatischen oder heterocyclischen Verbindung an sich bekannter und technisch gebräuchlicher Art ohne flüssigkristallinen Charakter abgemischt sein kann und wobei die Komponente A in einer solchen Abmischung 50-100 Mol-%, bevorzugt 70-100 Mol-%, besonders bevorzugt 85-100 Mol-%, ganz besonders bevorzugt 95-100 Mol-% der gesamten Abmischung darstellt.

6. Netzwerke nach Anspruch 1, herstellbar durch Umsetzung mindestens einer Komponente B der Formel

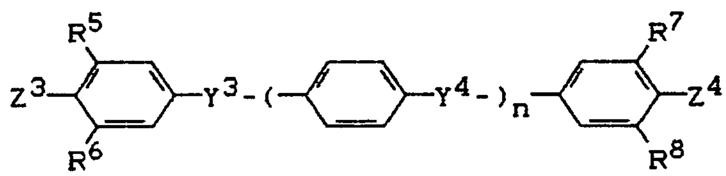

,

in der

| | |
|---|---|
| $R^5$ bis $R^8$ | unabhängig voneinander den in Anspruch 1 angegebenen Bedeutungsumfang haben, |
| $Z^3$ und $Z^4$ | unabhängig voneinander OH oder $NH_2$ bedeuten, |
| $Y^3$ und $Y^4$ | unabhängig voneinander für eine Einfachbindung, $-CH_2-CH_2-$, -CO-O- oder -O-CO- stehen und |
| n | den Wert Null oder Eins annimmt, |

bevorzugt herstellbar durch Umsetzung mindestens einer Komponente B aus der Gruppe

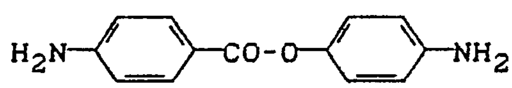

,

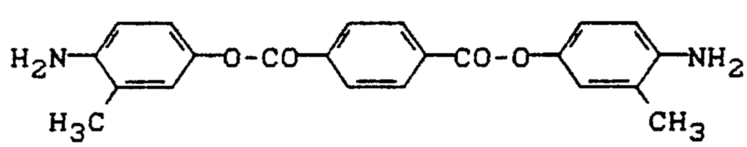

,

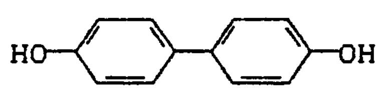

,

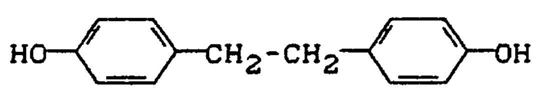

,

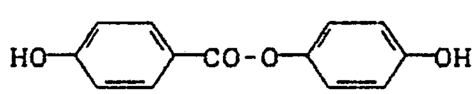

.

7. Netzwerke nach Anspruch 1, herstellbar durch Umsetzung mindestens einer Komponente B, wobei die Komponente B mit einem polyfunktionellen Amin, polyfunktionellen Phenol oder Epoxid-Härter oder

einem Gemisch mehrerer von ihnen an sich bekannter und technisch gebräuchlicher Art ohne flüssigkristallinen Charakter abgemischt sein kann und wobei die Komponente B in einer solchen Abmischung 50-100 Mol-%, bevorzugt 70-100 Mol-%, besonders bevorzugt 85-100 Mol-%, ganz besonders bevorzugt 95-100 Mol-% der gesamten Abmischung darstellt.

**8.** Netzwerke nach Anspruch 1, herstellbar durch Umsetzung der Komponenten A und B im Temperaturbereich von 60-160 °C, bevorzugt 60-140 °C zum Zwischenprodukt C, welches flüssigkristallinen Charakter aufweist, erkennbar an der opaken Veränderung.

**9.** Netzwerke nach Anspruch 1, herstellbar durch Aushärtung und Übergang in den Festkörper D im Temperaturbereich von 60-250 °C, bevorzugt 60-180 °C.

**10.** Netzwerke nach Anspruch 9, herstellbar durch Unterbrechung der Aushärtung durch Abkühlung auf eine Temperatur unterhalb von 60 °C und durch Fortsetzung der Aushärtung durch Wiedererwärmung auf eine Temperatur von 60-250 °C zu einem späteren Zeitpunkt, wobei dazwischen eine Formgebung oder Formveränderung liegen kann.